# EUROPÄISCHE PATENTANMELDUNG

(11) **EP 3 156 932 A1**
(43) Veröffentlichungstag der Anmeldung: **19.04.2017**
(21) Anmeldenummer: 15190246.7
(22) Anmeldetag: 16.10.2015
(51) Int. Cl.: G06F 21/62

(54) **VERFAHREN UND SYSTEM ZUM SCHUTZ VON VERTRAULICHEN ELEKTRONISCHEN DATEN**

(71) Anmelder: Deutsche Telekom AG, 53113 Bonn (DE)
(72) Erfinder: Unterschütz, Thomas, 64331 Weiterstadt (DE); Gerstmeyr, Matthias, 69502 Hemsbach (DE); Gonsberg, Swen, 55234 Erbes-Büdesheim (DE); Fondermann, Bernd, 60487 Frankfurt/M. (DE)
(74) Vertreter: Patentship Patentanwaltsgesellschaft mbH

(57) **Zusammenfassung**

Die Erfindung betrifft ein Verfahren (100) und ein System zum Schutz von elektronischen Daten. Das Verfahren (100) umfasst das Ermitteln (101) von Daten der elektronischen Daten, die mit einer Person assoziierbar sind, das Verschleiern (103) der mit einer Person assoziierbaren Daten der elektronischen Daten mittels eines ersten kryptographischen Schlüssels, das Aufbewahren (105) der elektronischen Daten mit den mittels des ersten kryptographischen Schlüssels verschleierten Daten, und, falls der erste kryptographische Schlüssel nicht mehr als sicher angesehen werden kann, das Verschleiern (107) der mittels des ersten kryptographischen Schlüssels verschleierten Daten mittels eines zweiten kryptographischen Schlüssels.

## Beschreibung

Die Erfindung betrifft ein Verfahren und ein System zum Schutz von vertraulichen elektronischen Daten.

Unter dem Schlagwort "Big Data" wird der Komplex von Technologien, die zum Sammeln und Auswerten von großen Datenmengen dienen, sowie die großen Datenmengen selbst verstanden. Die im Rahmen von "Big Data" anfallenden Mengen elektronischer Daten sind in der Regel zu groß oder zu komplex oder sind zu schnellen Änderungen unterzogen, um sie mit händischen und klassischen Methoden der Datenverarbeitung auszuwerten. Die gesammelten Daten können aus nahezu allen Quellen stammen: angefangen bei jeglicher elektronischer Kommunikation, über von Behörden und Firmen gesammelte Daten, bis hin zu den Aufzeichnungen verschiedenster Überwachungssysteme.

Die im Rahmen von "Big Data" anfallenden elektronischen Daten bzw. Dokumente können oftmals personenbezogene Daten oder Daten enthalten, die zumindest Rückschlüsse auf einzelne Personen zulassen, also mit einer einzelnen Person assoziierbar sind. Aus Gründen des Datenschutzes ist es deshalb gegebenenfalls notwendig, solche personenbezogenen Daten, d.h. Daten, die mit einer Person assoziierbare sind, vor der Weiterverarbeitung und insbesondere vor der Speicherung zu anonymisieren oder zu pseudonymisieren. Die Anonymisierung hat dabei das Ziel einen Rückschluss von den anonymisierten personenbezogenen Daten auf die Person vollständig zu verhindern. Die Pseudonymisierung ersetzt die Wiedererkennungsmerkmale einer Person mit einem Pseudonym, um die Wiedererkennung auszuschließen oder wesentlich zu erschweren. Der entscheidende Unterschied zwischen Anonymisierung und Pseudonymisierung ist bei der Anonymisierung das Auflösen bzw. bei der Pseudonymisierung das Erhalten von Bezügen, die zwischen verschiedenen personenbezogenen Daten einer Person ursprünglich bestanden.

Die Anonymisierung oder Pseudonymisierung von personenbezogenen Daten erfolgt in der Regel unter Verwendung von Verschlüsselungsalgorithmen. Der Verlust der Geheimhaltung des hierzu verwendeten kryptographischen Schlüssels stellt ein extrem hohes Risiko für den Datenschutz dar. Auch kann es sinnvoll sein, den kryptographischen Schlüssel von Zeit zu Zeit zu erneuern, um schon einem potentiellen Verlust der Geheimhaltung des kryptographischen Schlüssels vorzubeugen.

Gemäß dem Stand der Technik ist es bei jedem Wechsel des kryptographischen Schlüssels notwendig, auf die vorgehaltenen ursprünglichen personenbezogenen Daten zurück zu greifen und sie erneut zu verschlüsseln. Die bisher gespeicherten pseudonymisierten Daten werden dann verworfen. Wenn die ursprünglichen personenbezogenen Daten nicht mehr verfügbar sind müssen, aus Gründen des Datenschutzes die pseudonymisierten Daten unter Umständen ebenfalls verworfen werden. In diesem Fall sind sowohl die gesamten gesammelten Informationen als auch eine damit einhergehende Profilbildung vollständig verloren.

Vor diesem Hintergrund ist es die Aufgabe der vorliegenden Erfindung, ein verbessertes Verfahren und ein verbessertes System zum Schutz von vertraulichen, elektronischen Daten bereitzustellen, insbesondere von elektronischen Daten, die im Zusammenhang mit "Big Data" anfallen.

Diese Aufgabe wird durch die Merkmale der unabhängigen Ansprüche gelöst. Vorteilhafte Weiterbildungsformen sind Gegenstand der abhängigen Ansprüche.

Gemäß einem ersten Aspekt betrifft die Erfindung ein Verfahren zum Schutz von elektronischen Daten, insbesondere von elektronischen Daten, die im Zusammenhang mit "Big Data" anfallen. Das Verfahren umfasst einen Schritt des Ermittelns von Daten der elektronischen Daten, die mit einer Person assoziierbare sind, einen Schritt des Verschleierns der mit einer Person assoziierbare Daten der elektronischen Daten mittels eines ersten kryptographischen Schlüssels, einen Schritt des Aufbewahrens der elektronischen Daten mit den mittels des ersten kryptographischen Schlüssels verschleierten Daten, und, falls der erste kryptographische Schlüssel nicht mehr als sicher angesehen werden kann, einen Schritt des Verschleierns der mittels des ersten kryptographischen Schlüssels verschleierten Daten mittels eines zweiten kryptographischen Schlüssels.

Das Verfahren gemäß dem ersten Aspekt der Erfindung erlaubt die datenschutzkonforme Wiederverwendung von bereits verschleierten Daten, die beispielsweise aufgrund des Verlusts des zur Verschleierung verwendeten Schlüssels als kompromittiert betrachtet werden müssen. Gleichzeitig erlaubt das Verfahren gemäß dem ersten Aspekt der Erfindung ein einfaches regelmäßiges Wechseln des für die Verschleierung verwendeten Schlüssels. Statt hierzu auf die elektronischen Originaldaten zurückgreifen zu müssen, können vorteilhafterweise die elektronischen Daten mit den bereits verschleierten Daten verwendet werden, ohne dass eine kostspielige Wiederherstellung der elektronischen Originaldaten, beispielsweise durch eine Entschlüsselung der verschleierten Daten der elektronischen Daten, erforderlich ist.

In einer Ausführungsform des ersten Aspekts der Erfindung umfasst das Verfahren den weiteren Schritt, die elektronischen Daten mit den mittels des zweiten kryptographischen Schlüssels verschleierten Daten aufzubewahren.

In einer Ausführungsform des ersten Aspekts der Erfindung werden beim Schritt des Aufbewahrens der elektronischen Daten mit den mittels des ersten kryptographischen Schlüssels verschleierten Daten die elektronischen Daten mit den mittels des ersten kryptographischen Schlüssels verschleierten Daten in einem ersten elektronischen Speicher aufbewahrt und beim Schritt des Aufbewahrens der elektronischen Daten mit den mittels des zweiten kryptographischen Schlüssels verschleierten Daten die elektronischen Daten mit den mittels des zweiten kryptographischen Schlüssels verschleierten Daten in einem zweiten elektronischen Speicher aufbewahrt.

In einer Ausführungsform des ersten Aspekts der Erfindung umfasst das Verfahren vor dem Schritt des Verschleierns der mittels des ersten kryptographischen Schlüssels verschleierten Daten mittels des zweiten kryptographischen Schlüssels den Schritt des Ermittelns der mittels des ersten kryptographischen Schlüssels verschleierten Daten der elektronischen Daten.

In einer Ausführungsform des ersten Aspekts der Erfindung umfasst der Schritt des Verschleierns der ermittelten Daten, die mit einer Person assoziierbare sind, mittels des ersten kryptographischen Schlüssels den Schritt des Verschlüsselns der ermittelten Daten, die mit einer Person assoziierbare sind, mittels des ersten kryptographischen Schlüssels oder der Schritt des Verschleierns der mittels des ersten kryptographischen Schlüssels verschleierten Daten mittels des zweiten kryptographischen Schlüssels den Schritt des Verschlüsselns der mittels des ersten kryptographischen Schlüssels verschleierten Daten mittels des zweiten kryptographischen Schlüssels.

In einer Ausführungsform des ersten Aspekts der Erfindung umfasst der Schritt des Verschleierns der ermittelten Daten, die mit einer Person assoziierbare sind, mittels des ersten kryptographischen Schlüssels den Schritt des Anwendens einer schlüsselbasierten Hashfunktion auf die ermittelten Daten, die mit einer Person assoziierbar sind, mittels des ersten kryptographischen Schlüssels oder der Schritt des Verschleierns der mittels des ersten kryptographischen Schlüssels verschleierten Daten mittels des zweiten kryptographischen Schlüssels den Schritt des Anwendens einer schlüsselbasierten Hashfunktion auf die mittels des ersten kryptographischen Schlüssels verschleierten Daten mittels des zweiten kryptographischen Schlüssels.

In einer Ausführungsform des ersten Aspekts der Erfindung werden beim Schritt des Verschleierns der ermittelten Daten, die mit einer Person assoziierbare sind, mittels des ersten kryptographischen Schlüssels oder beim Schritt des Verschleierns der mittels des ersten kryptographischen Schlüssels verschleierten Daten mittels des zweiten kryptographischen Schlüssels die Daten anonymisiert.

In einer Ausführungsform des ersten Aspekts der Erfindung werden beim Schritt des Verschleierns der ermittelten Daten, die mit einer Person assoziierbare sind, mittels des ersten kryptographischen Schlüssels oder beim Schritt des Verschleierns der mittels des ersten kryptographischen Schlüssels verschleierten Daten mittels des zweiten kryptographischen Schlüssels die Daten pseudonymisiert.

In einer Ausführungsform des ersten Aspekts der Erfindung umfasst das Verfahren nach dem Schritt des Verschleierns der mittels des ersten kryptographischen Schlüssels verschleierten Daten mittels des zweiten kryptographischen Schlüssels den weiteren Schritt des Löschens der mittels des ersten kryptographischen Schlüssels verschleierten Daten.

In einer Ausführungsform des ersten Aspekts der Erfindung umfasst das Verfahren nach dem Schritt des Verschleierns der mittels des ersten kryptographischen Schlüssels verschleierten Daten mittels des zweiten kryptographischen Schlüssels den weiteren Schritt, die elektronischen Daten mit den mittels des ersten kryptographischen Schlüssels und des zweiten kryptographischen Schlüssels verschleierten Daten aufzubewahren.

In einer Ausführungsform des ersten Aspekts der Erfindung wird der erste Schlüssel oder der zweite Schlüssel von einer sicheren Schlüsselverwaltungseinheit bereitgestellt.

In einer Ausführungsform des ersten Aspekts der Erfindung definieren die elektronischen Daten eine Vielzahl von elektronischen Dokumenten und/oder bilden einen kontinuierlichen Datenstrom.

In einer Ausführungsform des ersten Aspekts der Erfindung handelt es sich bei den mit einer Person assoziierbare Daten der elektronischen Daten um einen Namen, eine Identifikationsnummer, eine Telefonnummer, eine E-Mail-Adresse, eine Kundennummer einer Person und/oder ein anderes Datenelement, das zur Identifizierung einer Person geeignet ist.

In einer Ausführungsform des ersten Aspekts der Erfindung wird der erste Schlüssel als nicht mehr sicher angesehen, falls der erste Schlüssel gebrochen worden ist, nicht mehr geheim ist oder ein geplanter Schlüsselwechsel ansteht.

Gemäß einem zweiten Aspekt betrifft die Erfindung ein System zum Schutz von elektronischen Daten mit einem Prozessor, der dazu ausgebildet ist, Daten der elektronischen Daten zu ermitteln, die mit einer Person assoziierbare sind, die mit einer Person assoziierbare Daten der elektronischen Daten mittels eines ersten kryptographischen Schlüssels zu verschleiern, die elektronischen Daten mit den mittels des ersten kryptographischen Schlüssels verschleierten Daten in einem Speicher zu speichern und, falls der erste kryptographische Schlüssel nicht mehr als sicher angesehen werden kann, die mittels des ersten kryptographischen Schlüssels verschleierten Daten mittels eines zweiten kryptographischen Schlüssels zu verschleiern.

Weitere Ausführungsbeispiele werden Bezug nehmend auf die beiliegenden Zeichnungen erläutert. Es zeigen:
- Fig. 1: eine schematische Darstellung eines Verfahrens zum Schutz von vertraulichen elektronischen Daten gemäß einer Ausführungsform;
- Fig. 2: eine schematische Darstellung eines Systems zum Schutz von vertraulichen elektronischen Daten in Form eines Fileservers gemäß einer Ausführungsform;
- Fig. 3: eine schematische Darstellung eines Systems zum Schutz von vertraulichen elektronischen Daten gemäß einer weiteren Ausführungsform;
- Fig. 4: eine schematische Darstellung des Ablaufs der Kommunikation in einem System zum Schutz von vertraulichen elektronischen Daten gemäß einer weiteren Ausführungsform;
- Fig. 5: eine schematische Darstellung des Ablaufs der Kommunikation in einem System zum Schutz von vertraulichen elektronischen Daten gemäß einer weiteren Ausführungsform;
- Fig. 6: eine schematische Darstellung des Ablaufs der Kommunikation in einem System zum Schutz von vertraulichen elektronischen Daten gemäß einer weiteren Ausführungsform;
- Fig. 7: eine schematische Darstellung des Ablaufs der Kommunikation in einem System zum Schutz von vertraulichen elektronischen Daten gemäß einer weiteren Ausführungsform;
- Fig. 8: eine schematische Darstellung des Ablaufs der Kommunikation in einem System zum Schutz von vertraulichen elektronischen Daten gemäß einer weiteren Ausführungsform; und
- Fig. 9: eine schematische Darstellung des Ablaufs der Kommunikation in einem System zum Schutz von vertraulichen elektronischen Daten gemäß einer weiteren Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

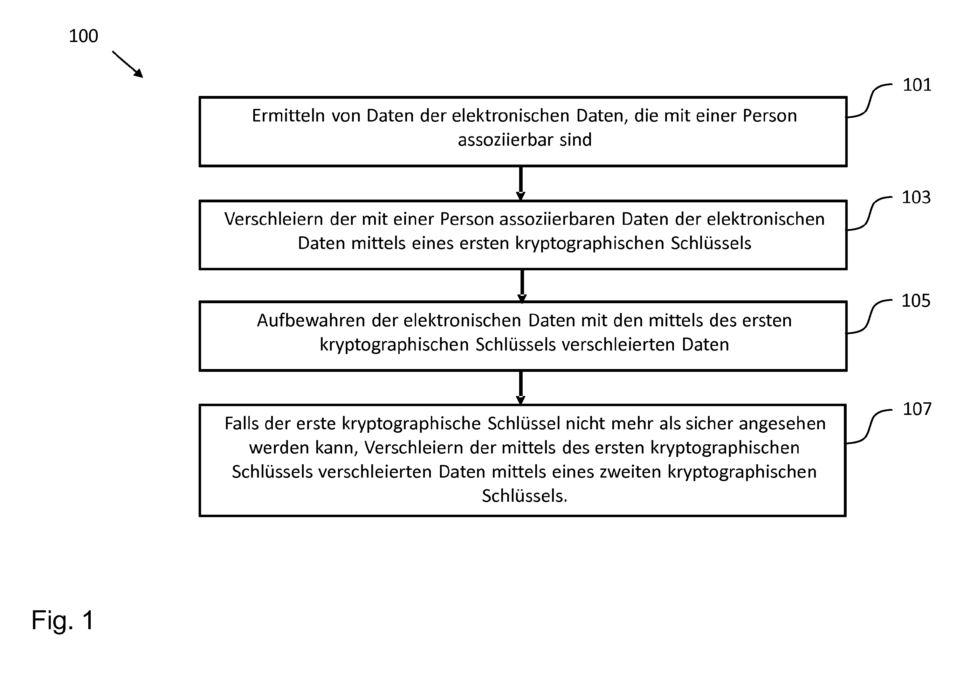

Figur 1 zeigt eine schematische Darstellung eines Verfahrens 100 zum Schutz von elektronischen Daten, insbesondere von elektronischen Daten, die im Rahmen von "Big Data" anfallen und personenbezogene, d.h. mit einer Person assoziierbare Daten umfassen, gemäß einer Ausführungsform.

Das Verfahren 100 umfasst einen Schritt 101 des Ermittelns der Daten der elektronischen Daten, die mit einer Person assoziierbare sind, was beispielsweise mittels geeigneter Such- und/oder Filteralgorithmen durchgeführt werden kann. Bei den mit einer Person assoziierbare Daten kann es sich beispielsweise um einen Namen, eine Identifikationsnummer, eine Telefonnummer, eine E-Mail-Adresse,eine Kundennummer einer Person und /oder ein anderes Datenelement handeln, das zur Identifizierung einer Person geeignet ist. Die elektronischen Daten können beispielsweise in Form einer Vielzahl von elektronischen Dokumenten, d.h. Files, vorliegen und/oder einem kontinuierlichen Datenstrom entstammen.

Das Verfahren 100 umfasst einen weiteren Schritt 103 des Verschleierns der mit einer Person assoziierbare Daten der elektronischen Daten mittels eines ersten kryptographischen Schlüssels.

Das Verfahren 100 umfasst einen weiteren Schritt 105 des Aufbewahrens der elektronischen Daten mit den mittels des ersten kryptographischen Schlüssels verschleierten Daten.

Das Verfahren 100 umfasst einen weiteren Schritt 107, falls der erste kryptographische Schlüssel nicht mehr als sicher angesehen werden kann, die mittels des ersten kryptographischen Schlüssels verschleierten Daten mittels eines zweiten kryptographischen Schlüssels zu verschleiern. Dies kann beispielsweise der Fall sein, wenn der erste Schlüssel gebrochen worden ist, nicht mehr geheim ist oder ein geplanter Schlüsselwechsel ansteht.

Gemäß einer Ausführungsform können die elektronischen Daten mit den mittels des zweiten kryptographischen Schlüssels verschleierten Daten aufbewahrt werden.

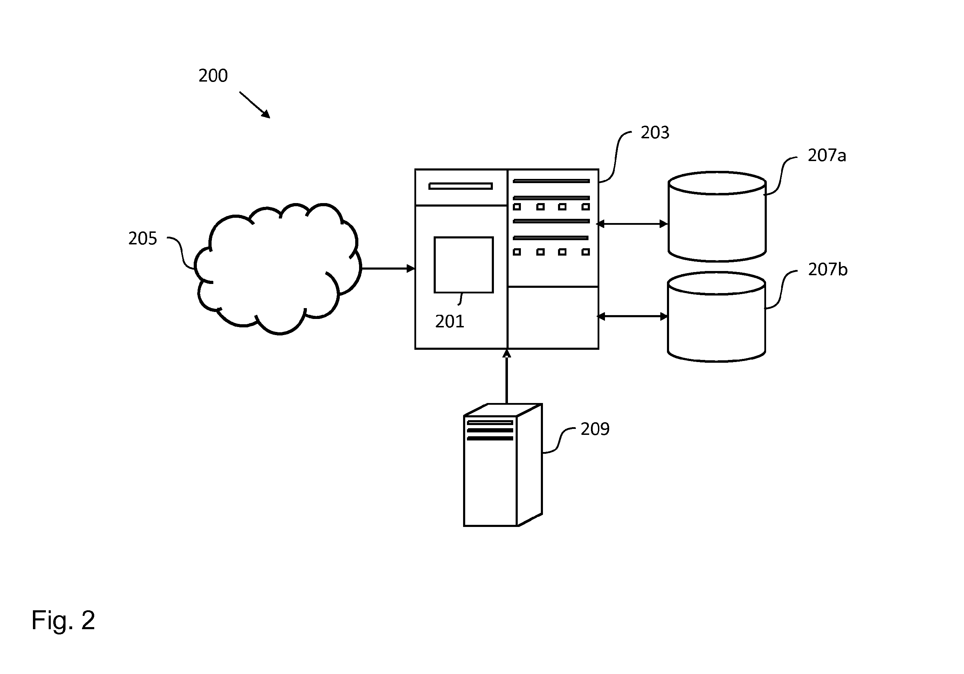

Gemäß einer Ausführungsform können beim Schritt des Aufbewahrens 105 der elektronischen Daten mit den mittels des ersten kryptographischen Schlüssels verschleierten Daten diese elektronischen Daten, d.h. die elektronischen Daten mit den mittels des ersten kryptographischen Schlüssels verschleierten Daten, in einem ersten elektronischen Speicher, beispielsweise in dem in Figur 2 dargestellten Speicher 207a, aufbewahrt werden und beim Schritt des Aufbewahrens der elektronischen Daten mit den mittels des zweiten kryptographischen Schlüssels verschleierten Daten können die elektronischen Daten mit den mittels des zweiten kryptographischen Schlüssels verschleierten Daten in einem zweiten elektronischen Speicher, beispielsweise in dem in Figur 2 dargestellten Speicher 207b, aufbewahrt werden.

Gemäß einer Ausführungsform umfasst das Verfahren 100 vor dem Schritt des Verschleierns der mittels des ersten kryptographischen Schlüssels verschleierten Daten mittels des zweiten kryptographischen Schlüssels einen weiteren Schritt des Ermitteins der mittels des ersten kryptographischen Schlüssels verschleierten Daten der elektronischen Daten.

Gemäß einer Ausführungsform umfasst der Schritt des Verschleierns 103 der ermittelten Daten, die mit einer Person assoziierbare sind, mittels des ersten kryptographischen Schlüssels einen Schritt des Verschlüsselns der ermittelten Daten, die mit einer Person assoziierbare sind, mittels des ersten kryptographischen Schlüssels oder der Schritt des Verschleierns 107 der mittels des ersten kryptographischen Schlüssels verschleierten Daten mittels des zweiten kryptographischen Schlüssels einen Schritt des Verschlüsselns der mittels des ersten kryptographischen Schlüssels verschleierten Daten mittels des zweiten kryptographischen Schlüssels. Hierzu sind beliebige schlüsselbasierte Verschlüsselungsverfahren geeignet.

Gemäß einer Ausführungsform umfasst der Schritt des Verschleierns 103 der ermittelten Daten, die mit einer Person assoziierbare sind, mittels des ersten kryptographischen Schlüssels einen Schritt des Anwendens einer schlüsselbasierten Hashfunktion auf die ermittelten Daten, die mit einer Person assoziierbare sind, mittels des ersten kryptographischen Schlüssels oder der Schritt des Verschleierns 107 der mittels des ersten kryptographischen Schlüssels verschleierten Daten mittels des zweiten kryptographischen Schlüssels einen Schritt des Anwendens einer schlüsselbasierten Hashfunktion auf die mittels des ersten kryptographischen Schlüssels verschleierten Daten mittels des zweiten kryptographischen Schlüssels.

Gemäß einer Ausführungsform werden beim Schritt des Verschleierns 103 der ermittelten Daten, die mit einer Person assoziierbare sind, mittels des ersten kryptographischen Schlüssels oder beim Schritt des Verschleierns 107 der mittels des ersten kryptographischen Schlüssels verschleierten Daten mittels des zweiten kryptographischen Schlüssels die Daten anonymisiert.

Gemäß einer Ausführungsform werden beim Schritt des Verschleierns 103 der ermittelten Daten, die mit einer Person assoziierbare sind, mittels des ersten kryptographischen Schlüssels oder beim Schritt des Verschleierns 107 der mittels des ersten kryptographischen Schlüssels verschleierten Daten mittels des zweiten kryptographischen Schlüssels die Daten pseudonymisiert.

Gemäß einer Ausführungsform umfasst das Verfahren 100 nach dem Schritt des Verschleierns 103 der mittels des ersten kryptographischen Schlüssels verschleierten Daten mittels des zweiten kryptographischen Schlüssels den weiteren Schritt des Löschens der mittels des ersten kryptographischen Schlüssels verschleierten Daten.

Gemäß einer Ausführungsform umfasst das Verfahren 100 nach dem Schritt des Verschleierns 107 der mittels des ersten kryptographischen Schlüssels verschleierten Daten mittels des zweiten kryptographischen Schlüssels einen weiteren Schritt, die elektronischen Daten mit den mittels des ersten kryptographischen Schlüssels und mittels des zweiten kryptographischen Schlüssels verschleierten Daten aufzubewahren.

Das Verfahren 100 kann beispielsweise durch das in Figur 2 dargestellte System 200 zum Schutz von elektronischen Daten durchgeführt werden. Das System 200 umfasst einen Prozessor 201. Der Prozessor 201 kann auf einem Server 203 implementiert sein und in Form von Hardware- und/oder Softwaremodulen ausgebildet sein. Der Server 203 wiederum kann Teil einer Serverfarm oder eines Datencenters sein.

Der Prozessor 201 ist dazu ausgebildet, das in Figur 1 dargestellte Verfahren 100 auszuführen. Dem Fileserver 203 bzw. dem Prozessor 201 können von einer Datenquelle 205 elektronische Daten zugeführt werden. Der Prozessor 201 ist dazu ausgebildet, in diesen elektronischen Daten personenbezogene bzw. mit einer Person assoziierbare Daten zu ermitteln. Der Prozessor 201 ist ferner dazu ausgebildet, die ermittelten mit einer Person assoziierbare Daten der elektronischen Daten mittels eines ersten kryptographischen Schlüssels zu verschleiern, insbesondere zu verschlüsseln. Der erste kryptographische Schlüssel kann beispielsweise von einer sicheren Schlüsselverwaltungseinheit 209 bereitgestellt werden. Der Prozessor 201 ist ferner dazu ausgebildet, die elektronischen Daten mit den mittels des ersten kryptographischen Schlüssels verschleierten Daten in einem Speicher, beispielsweise dem in Figur 2 dargestellten Speicher 207a und/oder in dem in Figur 2 dargestellten Speicher 207b, zu speichern, und zwar derart, dass in den elektronischen Daten die personenbezogenen Daten durch die verschleierten personenbezogenen Daten ersetzt sind. Der Prozessor 201 ist ferner dazu ausgebildet, falls der erste kryptographische Schlüssel nicht mehr als sicher angesehen werden kann, die mittels des ersten kryptographischen Schlüssels verschleierten Daten mittels eines zweiten kryptographischen Schlüssels zu verschleiern. Dies kann beispielsweise der Fall sein, wenn der erste Schlüssel gebrochen worden ist, nicht mehr geheim ist oder ein geplanter Schlüsselwechsel ansteht.

Auch dieser zweite kryptographische Schlüssel kann dem Prozessor 201 von der Schlüsselverwaltungseinheit 209 bereitgestellt werden.

Nachstehend werden weitere Ausführungsformen des Verfahrens 100 und des Systems 200 beschrieben.

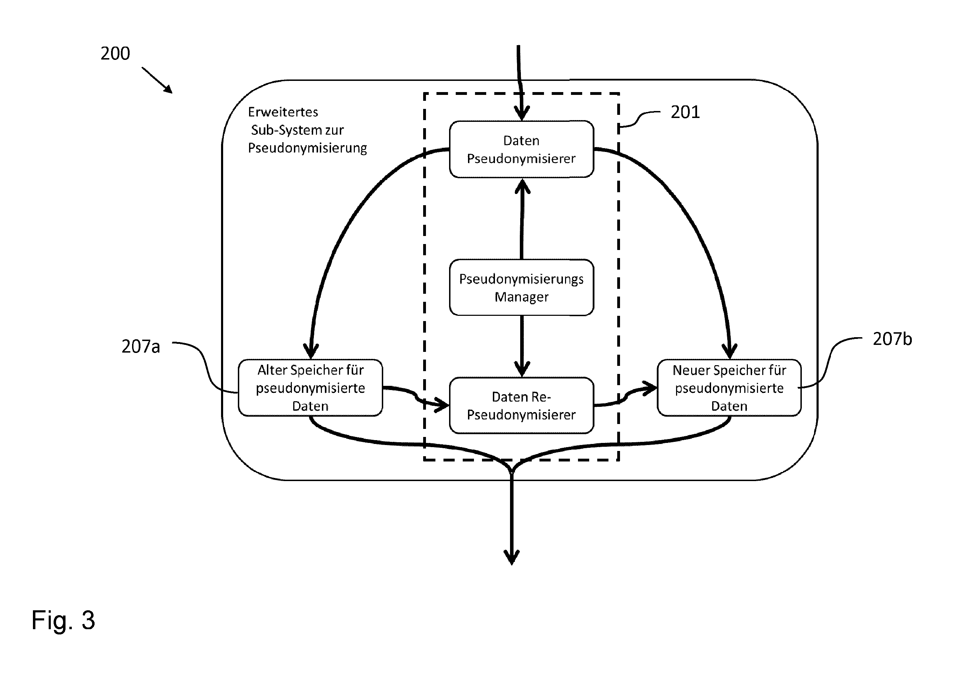

Figur 3 zeigt eine schematische Darstellung einer weiteren Ausführungsform des Systems 200 zum Schutz von vertraulichen elektronischen Daten. In dieser Ausführungsform kann von dem Prozessor 201 die Funktionalität eines Daten-Pseudonymisierers, eines Pseudonymisierungsmanagers und eines Daten-Repseudonymisierers bereitgestellt werden. Hierbei kann es sich beispielsweise um auf dem Prozessor 201 ablaufende Software-Module handeln.

Der Daten-Pseudonymisierer nimmt personenbezogene Daten entgegen und ersetzt alle personenbezogenen Daten durch pseudonymisierte Daten. Die pseudonymisierten Daten können dann zunächst im alten Speicher 207a für pseudonymisierte Daten, später auch im neuen Speicher 207b für pseudonymisierte Daten abgelegt werden. Der Daten-Pseudonymisierer übergibt die pseudonymisierten Daten an den alten Speicher 207a für pseudonymisierte Daten. Hier werden sie persistiert und bei Bedarf einer weiteren Datenverarbeitung zur Verfügung gestellt. Anschließend können die pseudonymisierten Daten auch dem Daten-Repseudonymisierer zur Verfügung gestellt werden. Der Pseudonymisierungsmanager orchestriert alle Aktivitäten, die bei einer erfindungsgemäßen Repseudonymisierung in Folge eines Verlusts der Geheimhaltung des Schlüssels, oder nach einem planmäßigen Schlüsselwechsel notwendig sind. Der Pseudonymisierungsmanager kennt darüber hinaus alle, im weiteren Laufe des Verfahrens beschriebenen Schlüssel, z.B. den alten Schlüssel und den neuen Schlüssel und kann diese dem Daten-Pseudonymisierer und dem Daten-Repseudonymisierer zur Verfügung stellen.

Der Daten Repseudonymisierer liest aus dem alten Speicher 207a für pseudonymisierte Daten die bereits mit dem alten ersten Schlüssel oder im Falle, dass das Verfahren zur Re-Pseudonymisierung von großen personenbezogenen Datenmengen bereits mehrfach durchlaufen wurde, mit den alten Schlüsseln pseudonymisierten Daten aus und verschlüsselt sie mit dem neuen zweiten Schlüssel ein zweites oder im Falle das das Verfahren zur Re-Pseudonymisierung von großen personenbezogenen Datenmengen bereits mehrfach durchlaufen wurde ein weiteres Mal. Die wiederverschlüsselten Daten werden in den neuen Speicher 207b für pseudonymisierte Daten geschrieben. Der Daten-Repseudonymisierer übergibt die erneut pseudonymisierten Daten an den neuen Speicher 207b für pseudonymisierte Daten. Hier werden sie persistiert und bei Bedarf einer Datenverarbeitung zur Verfügung gestellt.

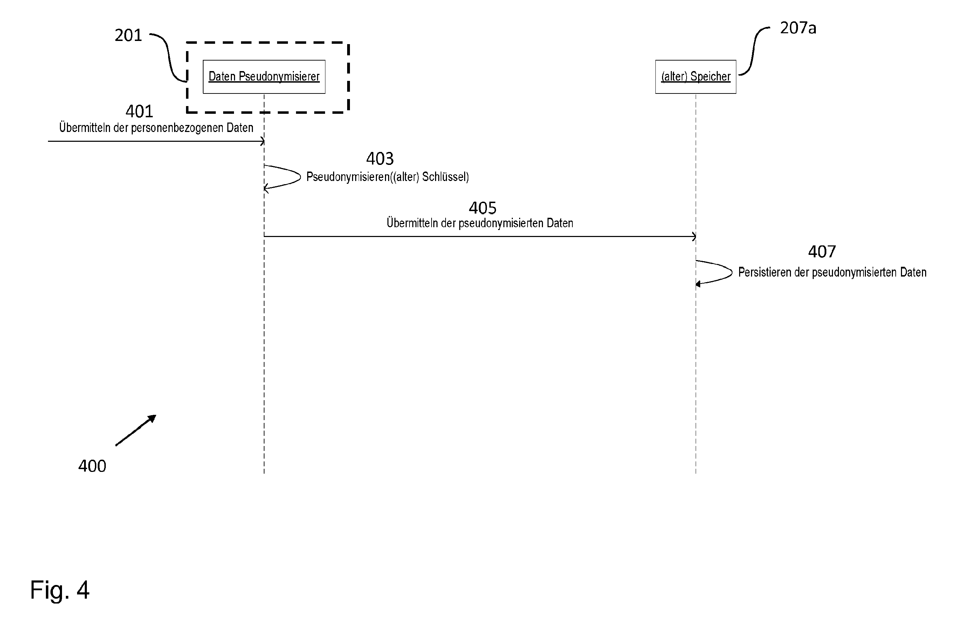

Figuren 4 bis 9 zeigen Details einer weiteren Ausführungsform des Verfahrens 100 zum Schutz von vertraulichen elektronischen Daten, die auf der in Figur 3 dargestellten Ausführungsform des Systems 200 basiert.

Figur 4 zeigt einen ersten Abschnitt 400 des Verfahrens 100 gemäß einer weiteren Ausführungsform. Personenbezogene Daten werden an den Daten-Pseudonymisierer übermittelt, unter Verwendung eines Schlüssels pseudonymisiert und im Speicher 207a für pseudonymisierte Daten abgelegt. Auf den in diesem Verfahrensabschnitt einzigen Schlüssel wird als "(alter) Schlüssel" und im Folgenden als "alter Schlüssel" referenziert. Das gleiche gilt für den in diesem Verfahrensabschnitt einzigen Speicher 207a, auf den hier als "(alten) Speicher für pseudonymisierte Daten" und im Folgenden als "alter Speicher für pseudonymisierte Daten" referenziert wird.

Der Abschnitt 400 umfasst im Einzelnen die folgenden Schritte:
401: Übermitteln der personenbezogenen Daten.
   Beispielsweise von der in Figur 2 dargestellten Datenquelle 205 werden dem Daten-Pseudonymisierer, der beispielsweise von dem in Figur 2 dargestellten Prozessor 201 bereitgestellt werden kann, elektronische Daten mit personenbezogenen Daten angeliefert.
403: Pseudonymisieren mit dem alten Schlüssel
   In den angelieferten, personenbezogenen Daten werden die personenbezogenen Informationen erkannt und verschleiert, insbesondere verschlüsselt. Die Verschlüsselung erfolgt auf Basis des (alten) Schlüssels. Somit sind die personenbezogenen Daten in verschleierte, insbesondere pseudonymisierte Daten überführt.
405: Übermitteln der pseudonymisierten Daten
   Die pseudonymisierten Daten werden an den (alten) Speicher 207a für pseudonymisierte Daten übermittelt.
407: Persistieren der pseudonymisierten Daten
   Die pseudonymisierten Daten werden im (alten) Speicher 207a für pseudonymisierte Daten in einer Datenbank persisitiert.

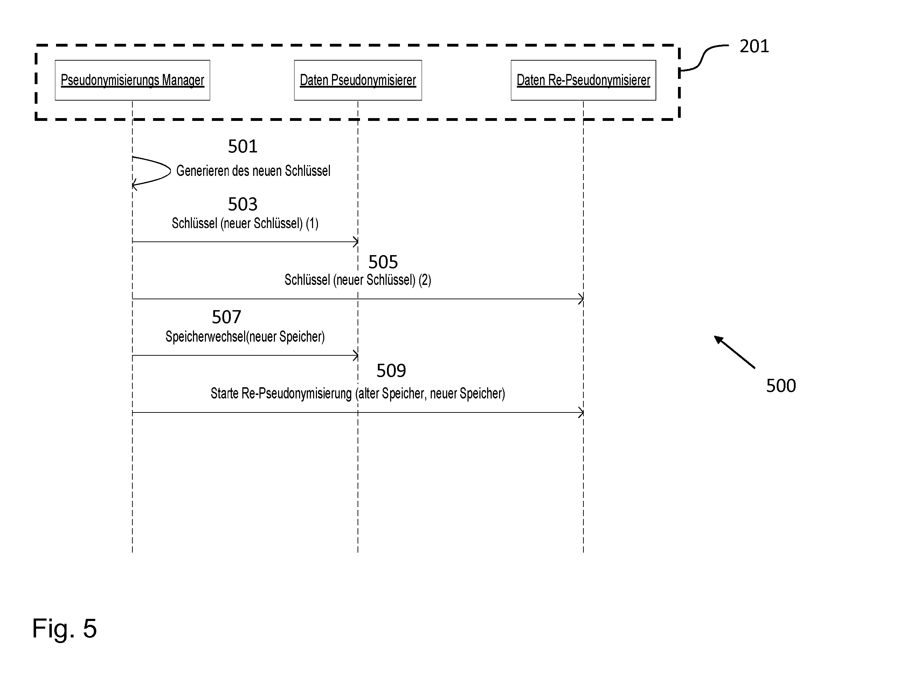

Figur 5 zeigt einen zweiten Abschnitt 500 des Verfahrens 100 gemäß der weiteren Ausführungsform. Dem zweiten Verfahrensabschnitt 500 geht voraus, dass der im ersten Verfahrensabschnitt 400 verwendete "alte Schlüssel" nicht mehr weiter verwendet werden kann oder soll. Dies ist z.B. durch den Verlust der Geheimhaltung des Schlüssels der Fall, oder bedingt durch einen regelmäßig vorgenommen Schlüsselwechsel. Der Pseudonymisierungsmanager startet mit diesem Verfahrensabschnitt 500 alle notwendigen Aktivitäten für einen Schlüsselwechsel. Genaugenommen "wechselt" dieser Verfahrensabschnitt keine Schlüssel gegeneinander aus. Es wird vielmehr zu dem alten Schlüssel ein weiterer neuer Schlüssel hinzugefügt. Im Falle, dass das Verfahren bereits mehrfach durchlaufen wurde, wird zu den alten Schlüsseln ein weiterer neuer Schlüssel hinzugefügt. Der neue Schlüssel kann beispielsweise vom Pseudonymisierungsmanager generiert und an den Daten-Pseudonymisierer sowie den Daten-Repseudonymisierer weitergeleitet werden. Der Daten-Pseudonymisierer wird angewiesen nunmehr pseudonymisierte Daten nicht mehr im alten Speicher 207a für pseudonymisierte Daten, sondern im neuen Speicher 207b für pseudonymisierte Daten zu persistieren. Der Daten-Repseudonymisierer wird angewiesen, die aus den oben genannten Gründen nicht mehr als pseudonymisiert betrachteten Daten des alten Speichers 207a erneut zu pseudonymisieren und in den neuen Speicher 207b für pseudonymisierte Daten zu übertragen.

Der Abschnitt 500 umfasst im Einzelnen die folgenden Schritte:
501: Generieren des neuen Schlüssels
   Der Pseudonymisierungsmanager als Teil des Prozessors 201 generiert den neuen Schlüssel, der im weiteren Verlauf des Verfahrens zur Verschlüsselung von Daten eingesetzt wird.
503: Schlüssel (neuer Schlüssel) (1)
   Der neue Schlüssel wird an den Daten-Pseudonymisierer übermittelt.
505: Schlüssel (neuer Schlüssel) (2)
   Der neue Schlüssel wird an den Daten-Repseudonymisierer übermittelt.
507: Speicherwechsel (neuer Speicher)
   Der Daten-Pseudonymisierer wird angewiesen, nunmehr die pseudonymisierten Daten im neuen Speicher 207b zu persistieren.
509: Starte Re-Pseudonymisierung (alter Speicher, neuer Speicher)
   Der Daten-Repseudonymisierer wird angewiesen, die im alten Speicher 207a vorhandenen Daten erneut zu pseudonymisieren und im neuen Speicher 207b zu persistieren.

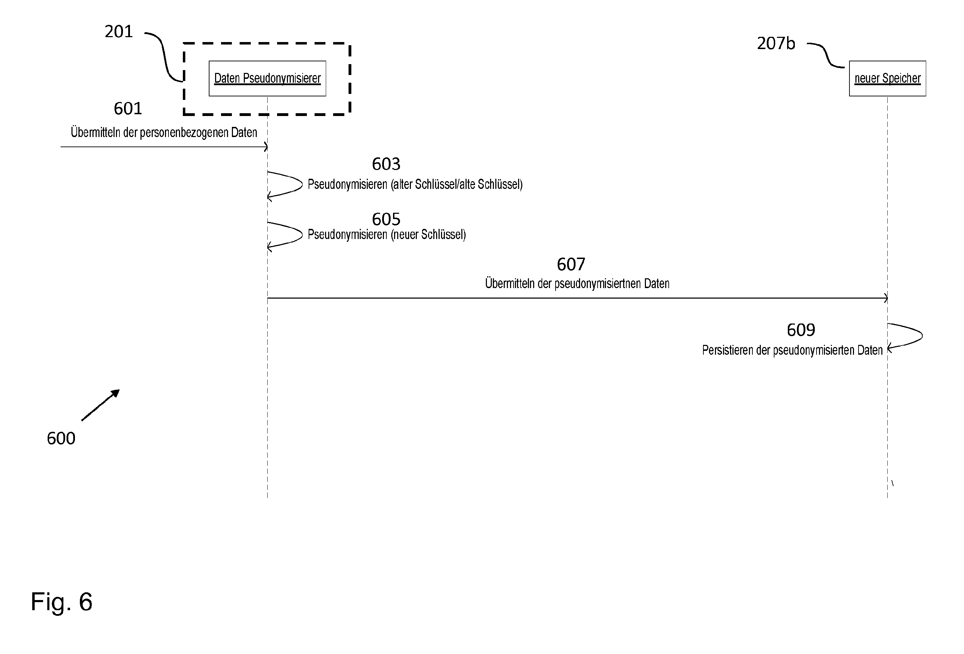

Figur 6 zeigt einen dritten Abschnitt 600 des Verfahrens 100 gemäß der weiteren Ausführungsform. Anfallende personenbezogene Daten werden an den Daten-Pseudonymisierer übermittelt. Unter Verwendung des alten Schlüssels werden die personenbezogenen Daten wie in Verfahrensabschnitt 400 verschlüsselt. Wurde das Verfahren bereits mehrmals durchlaufen, so werden die Daten unter Verwendung der alten Schlüssel wie im Verfahrensabschnitt 400 verschlüsselt. Die verschlüsselten Daten können allerdings aus den oben genannten Gründen nicht als pseudonymisiert betrachtet werden. Deshalb werden sie ein weiteres Mal, diesmal mit dem neuen Schlüssel verschlüsselt. Nunmehr sind die ursprünglichen und jetzt zweimal verschlüsselten Daten pseudonymisiert. Die pseudonymisierten Daten werden allerdings nicht mehr im alten Speicher 207a für pseudonymisierte Daten, sondern vielmehr im neuen Speicher 207b für pseudonymisierte Daten abgelegt. Dieser Speicherwechsel wurde durch den Aufruf der Nachricht Speicherwechsel (neuer Speicher) aus dem Verfahrensabschnitt 500 initiiert.

Der Abschnitt 600 umfasst im Einzelnen die folgenden Schritte:
601: Übermitteln der personenbezogenen Daten
   Beispielsweise von der in Figur 2 dargestellten Datenquelle 205 werden dem Daten-Pseudonymisierer, der beispielsweise von dem in Figur 2 dargestellten Prozessor 201 bereitgestellt werden kann, elektronische Daten mit personenbezogenen Daten angeliefert.
603: Pseudonymisieren (alter Schlüssel/alte Schlüssel)
   In den angelieferten, personenbezogenen Daten werden die persönlichen Informationen erkannt und verschlüsselt. Die Verschlüsselung erfolgt auf Basis des alten Schlüssels. Somit sind die personenbezogenen Daten in pseudonymisierte Daten überführt. Sind diesem Verfahrensdurchlauf bereits Verfahrensdurchläufe vorausgegangen, so werden die bereits pseudonymisierten Informationen, die nunmehr aus den oben genannten Gründen nicht mehr als pseudonymisiert betrachtet werden können, erkannt und erneut verschlüsselt. Diese erfolgt für jeden dieser Verfahrensdurchläufe mit den jeweiligen alten Schlüsseln des Verfahrensdurchlaufs.
605: Pseudonymisieren (neuer Schlüssel)
   Bei der letzten bzw. der in Figur 6 dargestellten zweiten Pseudonymisierung werden die Daten pseudonymisiert. Erst jetzt können die Daten als pseudonymisiert betrachtet werden.
607: Übermitteln der pseudonymisierten Daten
   Die pseudonymisierten Daten werden an den neuen Speicher 207b für pseudonymisierte Daten übermittelt.
609: Persistieren der pseudonymisierten Daten
   Die pseudonymisierten Daten werden im neuen Speicher 207b für pseudonymisierte Daten in einer Datenbank persisitiert.

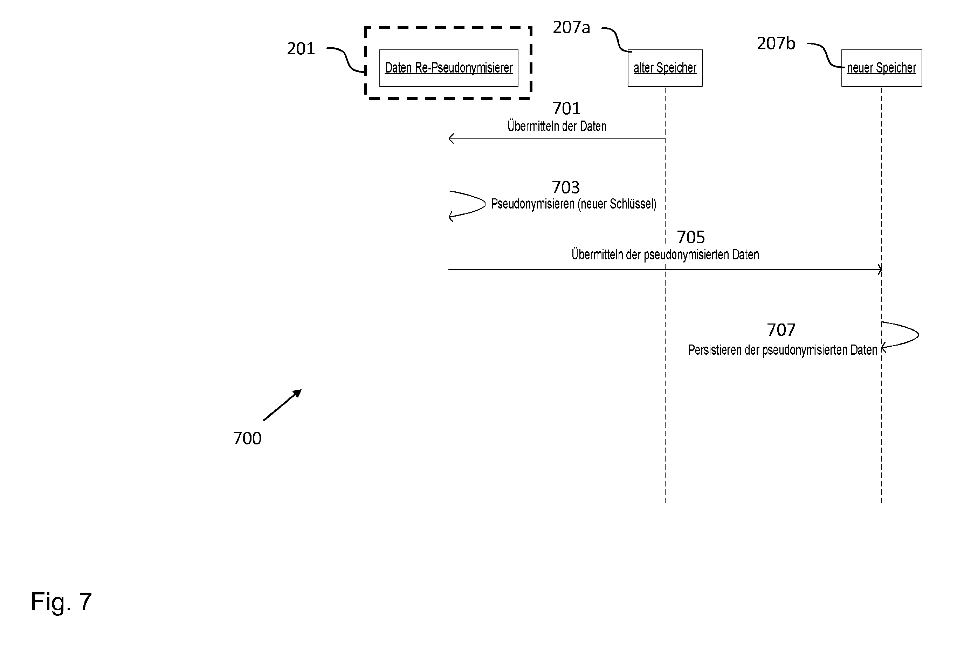

Figur 7 zeigt einen vierten Abschnitt 700 des Verfahrens 100 gemäß der weiteren Ausführungsform. Dieser Verfahrensabschnitt 700 wurde durch den Aufruf der Nachricht "Starte Repseudonymisierung (alter Speicher, neuer Speicher)" aus dem Verfahrensabschnitt 500 angestoßen. Daten aus dem alten Speicher 207a für pseudonymisierte Daten, die aus den oben genannten Gründen nicht mehr als pseudonymisiert betrachtet werden können, werden nach und nach dem alten Speicher 207a für pseudonymisierte Daten entnommen. Diese Daten werden mittels eines Verschlüsselungsverfahrens und unter Einsatz des "neuen Schlüssels" verschlüsselt. Nunmehr sind die ursprünglichen Daten jetzt doppelt verschlüsselt und damit pseudonymisiert. Wurde das Verfahren bereits mehrfach durchlaufen, sind die Daten jetzt mehrfach verschlüsselt und damit pseudonymisiert. Die pseudonymisierten Daten werden im neuen Speicher 207b für pseudonymisierte Daten abgelegt. Dieser Verfahrensabschnitt 700 wird so oft wiederholt bis alle pseudonymisierte Daten, die aus den oben genannten Gründen nicht mehr als pseudonymisiert betrachtet werden können, erneut verschlüsselt und damit pseudonymisiert wurden und in den neuen Speicher 207b für pseudonymisierte Daten übertragen wurden.

Der Abschnitt 700 umfasst im Einzelnen die folgenden Schritte:
701: Übermitteln der Daten
   Die Daten aus dem alten Speicher 207a für pseudonymisierte Daten, die nunmehr aus den oben genannten Gründen nicht mehr als pseudonymisiert betrachtet werden können, werden an den Daten-Repseudonymisierer übermittelt.
703: Pseudonymisieren (neuer Schlüssel)
   In den angelieferten Daten werden die bereits pseudonymisierten Informationen, die nunmehr aus den oben genannten Gründen nicht mehr als pseudonymisiert betrachtet werden können, erkannt und erneut verschlüsselt. Die Verschlüsselung erfolgt auf Basis des neuen Schlüssels. Somit sind die Daten wieder pseudonymisiert.
705: Übermitteln der pseudonymisierten Daten
   Die pseudonymisierten Daten werden an den neuen Speicher 207b für pseudonymisierte Daten übermittelt.
707: Persistieren der pseudonymisierten Daten
   Die pseudonymisierten Daten werden im neuen Speicher 207b für pseudonymisierte Daten in einer Datenbank persisitiert.

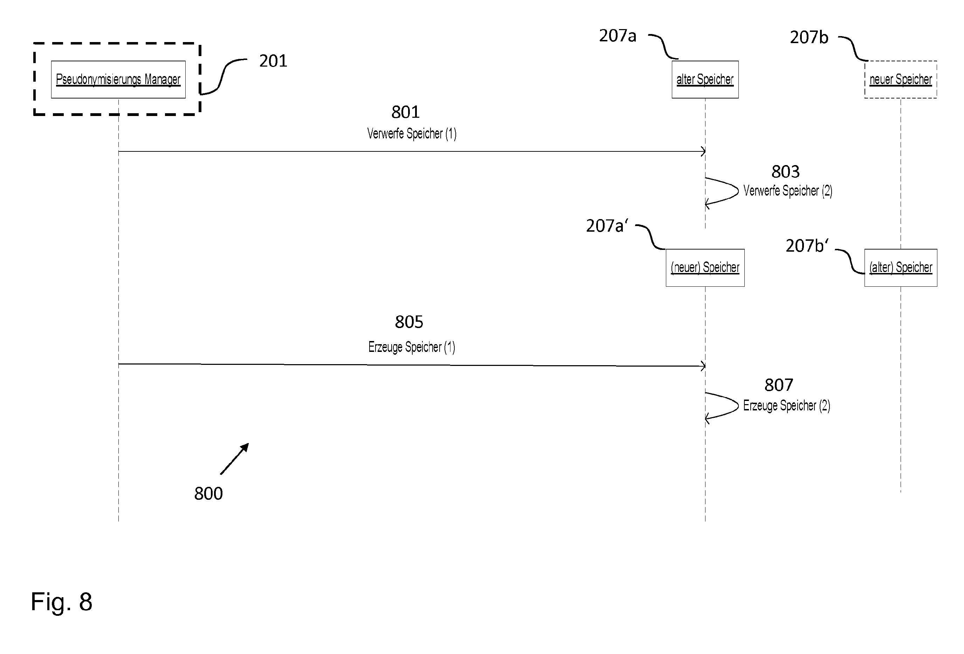

Figur 8 zeigt einen fünften Abschnitt 800 des Verfahrens 100 gemäß der weiteren Ausführungsform. Mit diesem letzten Verfahrensabschnitt 800 wird der nicht mehr benötigte "alte Speicher" verworfen. In Vorbereitung eines zukünftigen Verfahrensdurchlaufs wird ein neuer Speicher, nämlich der "(neue) Speicher" erzeugt. Mit der Erzeugung des "(neuen) Speichers" wird der (ehemals) "neue Speicher" zum neuen "(alten) Speicher".

Der Abschnitt 800 umfasst im Einzelnen die folgenden Schritte:
801: Verwerfe Speicher (1)
   Der Pseudonymisierungsmanager stößt das Löschen des alten Speichers 207a an.
803: Verwerfe Speicher (2)
   Der alte Speicher 207a wird verworfen. Alle Daten werden gelöscht.
805: Erzeuge Speicher (1)
   Der Pseudonymisierungsmanager stößt die Erzeugung und die Initialisierung des (neuen) Speichers 207b an.
807: Erzeuge Speicher (2)
   Der neue Speicher 207b wird erzeugt und initialisiert.
Das vorstehend beschriebene Verfahren 100 kann mehrfach, für jeden Schlüsselwechsel neu durchlaufen werden. In diesem Fall ist der Begriff "neuer Speicher" des vorangegangenen Verfahrensdurchlaufs im neuen Verfahrensdurchlauf durch den Begriff "alter Speicher" zu ersetzen. Mit jedem neuen Verfahrensdurchlauf entsteht eine neuer "neuer Speicher", was in Figur 8 durch die Bezugszeichen 207a' und 207b' angedeutet ist. Insbesondere verändert sich der Verfahrensabschnitt 600 bei der wiederholten Durchführung des Verfahrens. Sind einem Verfahrensdurchlauf bereits Verfahrensdurchläufe vorausgegangen, so erfolgt eine Pseudonymisierung für jeden dieser Verfahrensdurchläufe mit dem jeweiligen alten Schlüssel des Verfahrensdurchlaufs. Bei der ersten Pseudonymisierung im Rahmen des Verfahrensabschnitts 600 werden die personenbezogenen Daten erkannt und pseudonymisiert. Bei jeder weiteren Pseudonymisierung werden die bereits pseudonymisierten Daten erneut pseudonymisiert.

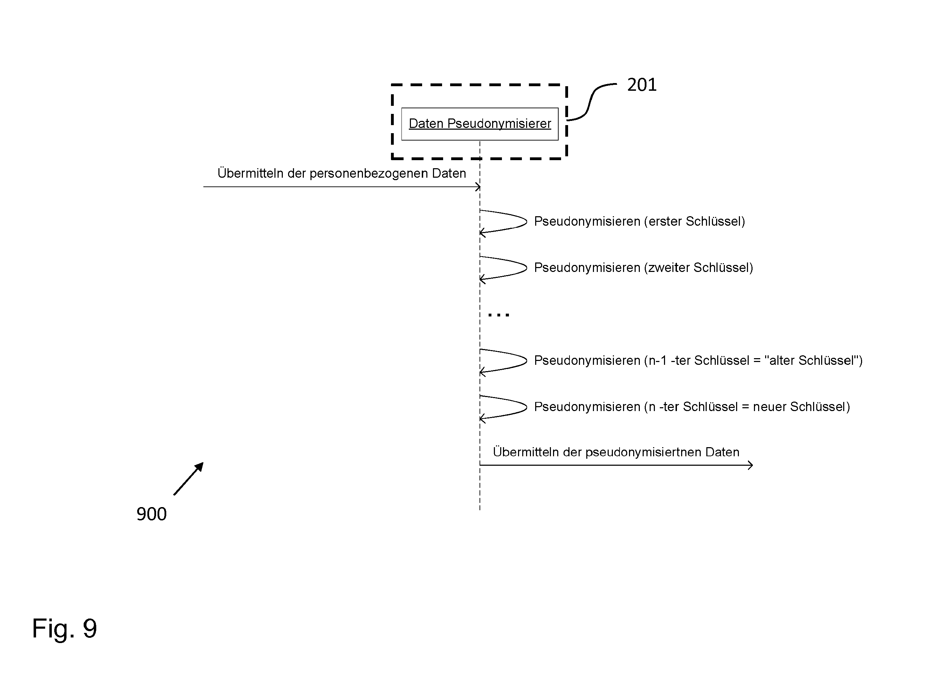

Figur 9 zeigt eine schematische Darstellung des Verfahrensabschnitts bei der Pseudonymisierung beim n-ten Verfahrensdurchlauf. Der im Plural stehende Begriff "alte Schlüssel" bezieht sich in diesem Fall auf den 1. bis (n-1)-ten Schlüssel. Der Begriff "alter Schlüssel" bezieht sich in diesem Fall auf den (n-1)-ten Schlüssel. Der Begriff "neuer Schlüssel" bezieht sich auf den n-ten Schlüssel.

Bei den vorstehend im Zusammenhang mit den Figuren 3 bis 9 beschriebenen weiteren Ausführungsformen des Verfahrens 100 und des Systems 200 werden die personenbezogenen Daten pseudonymisiert. Dies stellt jedoch lediglich eine spezielle Ausführungsform von System und Verfahren dar. In anderen Ausführungsformen können die personenbezogenen Daten auch auf andere Art und Weise verschleiert, z.B. anonymisiert, werden.

Bei den vorstehend im Zusammenhang mit den Figuren 3 bis 9 beschriebenen weiteren Ausführungsformen des Verfahrens 100 und des Systems 200 wird der jeweils neue Schlüssel sowie die alten Schlüssel vom Pseudonymisierungsmanager aufbewahrt. Dies stellt jedoch lediglich eine spezielle Ausführungsform dar. In einer anderen vorteilhaften Ausführungsform können der jeweils neue Schlüssel sowie die alten Schlüssel in einer separaten Schlüsselverwaltungseinheit, beispielsweise der in Figur 2 dargestellten Schlüsselverwaltungseinheit 209, aufbewahrt werden. Die Schlüsselverwaltungseinheit 209 kann weiterreichende Sicherheitsanforderungen erfüllen.

Bei den vorstehend im Zusammenhang mit den Figuren 3 bis 9 beschriebenen weiteren Ausführungsformen des Verfahrens 100 und des Systems 200 wird nach einer Re-Pseudonymisierung der alte Speicher 207a für pseudonymisierte Daten verworfen. Dies stellt lediglich eine spezielle Ausführungsform dar. In einer anderen vorteilhaften Ausführungsform kann dieser alte Speicher 207a aufbewahrt werden. Eine Aufbewahrung kann z.B. der Archivierung dienen.

Bei den vorstehend im Zusammenhang mit den Figuren 3 bis 9 beschriebenen weiteren Ausführungsformen des Verfahrens 100 und des Systems 200 ist der neuen Speicher 207b für pseudonymisierte Daten bereits vor dem Schlüsselwechsel vorhanden und initialisiert. Dies stellt lediglich eine spezielle Ausführungsform dar. In einer anderen vorteilhaften Ausführungsform kann der neue Speicher 207b auch zu einem anderen, geeigneten Zeitpunkt angelegt und initialisiert werden. Ein solcher Zeitpunkt wäre z.B. vor der Nachricht "Speicherwechsel (neuer Speicher)" im Verfahrensabschnitt 500.

Bei den vorstehend im Zusammenhang mit den Figuren 3 bis 9 beschriebenen weiteren Ausführungsformen des Verfahrens 100 und des Systems 200 werden zwischen den Einheiten jeweils einzelne, individuelle Datensätze übertragen. Dies stellt lediglich eine spezielle Ausführungsform dar. In einer anderen vorteilhaften Ausführungsform können Daten auch in Form eines kontinuierlichen Datenstroms übertragen werden.

Bei den vorstehend im Zusammenhang mit den Figuren 3 bis 9 beschriebenen weiteren Ausführungsformen des Verfahrens 100 und des Systems 200 werden Daten in Datenbanken persistiert. Dies stellt lediglich eine spezielle Ausführungsform dar. In einer anderen vorteilhaften Ausführungsform können Daten auch in anderer geeigneter Form persistiert werden. Andere geeignete Formen können z.B. Dateien eines Dateisystems sein.

Bei den vorstehend im Zusammenhang mit den Figuren 3 bis 9 beschriebenen weiteren Ausführungsformen des Verfahrens 100 und des Systems 200 werden Daten persistiert. Dies stellt lediglich eine spezielle Ausführungsform dar. In einer anderen vorteilhaften Ausführungsform können Daten auch transient gehalten werden.

Bei den vorstehend im Zusammenhang mit den Figuren 3 bis 9 beschriebenen weiteren Ausführungsformen des Verfahrens 100 und des Systems 200 werden Daten im Rahmen der Re-Pseudonymisierung von dem alten Speicher 207a in den neuen Speicher 207b dupliziert. Die Daten sind also in zwei verschiedenen Speichern vorhanden. Dies stellt lediglich eine spezielle Ausführungsform dar. In einer anderen vorteilhaften Ausführungsform können Daten auch in einem einzigen Speicher von ihrem Ausgangszustand in den re-pseudonymisierten Zustand überführt werden. Daten sind dann zu jedem Zeitpunkt in nur einem einzigen Speicher vorhanden.

## Patentansprüche

1. Verfahren (100) zum Schutz von elektronischen Daten, umfassend:
Ermitteln (101) von Daten der elektronischen Daten, die mit einer Person assoziierbar sind;
Verschleiern (103) der mit einer Person assoziierbare Daten der elektronischen Daten mittels eines ersten kryptographischen Schlüssels;
Aufbewahren (105) der elektronischen Daten mit den mittels des ersten kryptographischen Schlüssels verschleierten Daten; und
falls der erste kryptographische Schlüssel nicht mehr als sicher angesehen werden kann, Verschleiern (107) der mittels des ersten kryptographischen Schlüssels verschleierten Daten mittels eines zweiten kryptographischen Schlüssels.

2. Verfahren (100) nach Anspruch 1, wobei das Verfahren einen weiteren Schritt umfasst, die elektronischen Daten mit den mittels des zweiten kryptographischen Schlüssels verschleierten Daten aufzubewahren.

3. Verfahren (100) nach Anspruch 2, wobei beim Schritt des Aufbewahrens (105) der elektronischen Daten mit den mittels des ersten kryptographischen Schlüssels verschleierten Daten die elektronischen Daten mit den mittels des ersten kryptographischen Schlüssels verschleierten Daten in einem ersten elektronischen Speicher (207a) aufbewahrt werden und beim Schritt des Aufbewahrens der elektronischen Daten mit den mittels des zweiten kryptographischen Schlüssels verschleierten Daten die elektronischen Daten mit den mittels des zweiten kryptographischen Schlüssels verschleierten Daten in einem zweiten elektronischen Speicher (207b) aufbewahrt werden.

4. Verfahren (100) nach einem der vorhergehenden Ansprüche, wobei das Verfahren vor dem Schritt des Verschleierns (107) der mittels des ersten kryptographischen Schlüssels verschleierten Daten mittels des zweiten kryptographischen Schlüssels einen weiteren Schritt des Ermittelns der mittels des ersten kryptographischen Schlüssels verschleierten Daten der elektronischen Daten umfasst.

5. Verfahren (100) nach einem der vorhergehenden Ansprüche, wobei der Schritt des Verschleierns (103) der ermittelten Daten, die mit einer Person assoziierbare sind, mittels des ersten kryptographischen Schlüssels einen Schritt des Verschlüsselns der ermittelten Daten, die mit einer Person assoziierbare sind, mittels des ersten kryptographischen Schlüssels umfasst oder der Schritt des Verschleierns (107) der mittels des ersten kryptographischen Schlüssels verschleierten Daten mittels des zweiten kryptographischen Schlüssels einen Schritt des Verschlüsselns der mittels des ersten kryptographischen Schlüssels verschleierten Daten mittels des zweiten kryptographischen Schlüssels umfasst.

6. Verfahren (100) nach einem der vorhergehenden Ansprüche, wobei der Schritt des Verschleierns (103) der ermittelten Daten, die mit einer Person assoziierbare sind, mittels des ersten kryptographischen Schlüssels einen Schritt des Anwendens einer schlüsselbasierten Hashfunktion auf die ermittelten Daten, die mit einer Person assoziierbare sind, mittels des ersten kryptographischen Schlüssels umfasst oder der Schritt des Verschleierns (107) der mittels des ersten kryptographischen Schlüssels verschleierten Daten mittels des zweiten kryptographischen Schlüssels einen Schritt des Anwendens einer schlüsselbasierten Hashfunktion auf die mittels des ersten kryptographischen Schlüssels verschleierten Daten mittels des zweiten kryptographischen Schlüssels umfasst.

7. Verfahren (100) nach einem der vorhergehenden Ansprüche, wobei beim Schritt des Verschleierns (103) der ermittelten Daten, die mit einer Person assoziierbare sind, mittels des ersten kryptographischen Schlüssels oder beim Schritt des Verschleierns (107) der mittels des ersten kryptographischen Schlüssels verschleierten Daten mittels des zweiten kryptographischen Schlüssels die Daten anonymisiert werden.

8. Verfahren (100) nach einem der vorhergehenden Ansprüche, wobei beim Schritt des Verschleierns (103) der ermittelten Daten, die mit einer Person assoziierbare sind, mittels des ersten kryptographischen Schlüssels oder beim Schritt des Verschleierns (107) der mittels des ersten kryptographischen Schlüssels verschleierten Daten mittels des zweiten kryptographischen Schlüssels die Daten pseudonymisiert werden.

9. Verfahren (100) nach einem der vorhergehenden Ansprüche, wobei das Verfahren (100) nach dem Schritt des Verschleierns (109) der mittels des ersten kryptographischen Schlüssels verschleierten Daten mittels des zweiten kryptographischen Schlüssels einen weiteren Schritt des Löschens der mittels des ersten kryptographischen Schlüssels verschleierten Daten umfasst.

10. Verfahren (100) nach einem der vorhergehenden Ansprüche, wobei das Verfahren (100) nach dem Schritt des Verschleierns (107) der mittels des ersten kryptographischen Schlüssels verschleierten Daten mittels des zweiten kryptographischen Schlüssels einen weiteren Schritt umfasst, die elektronischen Daten mit den mittels des ersten kryptographischen Schlüssels und mittels des zweiten kryptographischen Schlüssels verschleierten Daten aufzubewahren.

11. Verfahren (100) nach einem der vorhergehenden Ansprüche, wobei der erste Schlüssel oder der zweite Schlüssel von einer sicheren Schlüsselverwaltungseinheit (209) bereitgestellt wird.

12. Verfahren (100) nach einem der vorhergehenden Ansprüche, wobei die elektronischen Daten eine Vielzahl von elektronischen Dokumenten definieren und/oder einen kontinuierlichen Datenstrom bilden.

13. Verfahren (100) nach einem der vorhergehenden Ansprüche, wobei es sich bei den mit einer Person assoziierbaren Daten der elektronischen Daten um einen Namen, eine Identifikationsnummer, eine Telefonnummer, eine E-Mail-Adresse, eine Kundennummer einer Person und/oder ein anderes Datenelement handelt, das zur Identifizierung einer Person geeignet ist.

14. Verfahren (100) nach einem der vorhergehenden Ansprüche, wobei der erste Schlüssel nicht mehr als sicher angesehen werden kann, falls der erste Schlüssel gebrochen worden ist, nicht mehr geheim ist oder ein geplanter Schlüsselwechsel ansteht.

15. System (200) zum Schutz von elektronischen Daten, umfassend:
einen Prozessor (201), der dazu ausgebildet ist:
Daten der elektronischen Daten zu ermitteln, die mit einer Person assoziierbare sind;
die mit einer Person assoziierbare Daten der elektronischen Daten mittels eines ersten kryptographischen Schlüssels zu verschleiern;
die elektronischen Daten mit den mittels des ersten kryptographischen Schlüssels verschleierten Daten in einem Speicher zu speichern; und
falls der erste kryptographische Schlüssel nicht mehr als sicher angesehen werden kann, die mittels des ersten kryptographischen Schlüssels verschleierten Daten mittels eines zweiten kryptographischen Schlüssels zu verschleiern.
